# FASCICULE DE BREVET EUROPEEN

(11) **EP 3 789 160 B1**
(45) Date de publication et mention de la délivrance du brevet: **20.04.2022**
(21) Numéro de dépôt: 20193981.6
(22) Date de dépôt: 01.09.2020
(51) Int. Cl.: B25B 1/24, B25B 5/00, B25B 5/10, B25B 5/16, B23Q 3/06

(54) **BRIDE DE MAINTIEN D'UN BLOC DE MATIÈRE SUR UNE TABLE D'USINAGE, DISPOSITIF DE BRIDAGE COMPRENANT LADITE BRIDE ET PROCÉDÉ DE BRIDAGE D'UN BLOC DE MATIÈRE SUR UNE TABLE D'USINAGE**
HALTEFLANSCH ZUM HALTEN EINES MATERIALBLOCKS AUF EINEM BEARBEITUNGSTISCH, SPANNVORRICHTUNG, DIE DIESEN FLANSCH UMFASST, UND SPANNVERFAHREN EINES MATERIALBLOCKS AUF EINEM BEARBEITUNGSTISCH
CLAMP FOR HOLDING A BLOCK OF MATERIAL ON A MACHINING TABLE, CLAMPING DEVICE COMPRISING SAID CLAMP AND METHOD FOR CLAMPING A BLOCK OF MATERIAL ON A MACHINING TABLE

(30) Priorité: 09.09.2019 FR 1909889
(43) Date de publication de la demande: 10.03.2021
(73) Titulaire: Airbus Operations SAS, 31060 Toulouse (FR)
(72) Inventeur: HAMON, Arnaud, 31060 Toulouse (FR); LHOPITAL, Vincent, 31060 Toulouse (FR); LOYER, Anthony, 31060 Toulouse (FR)
(74) Mandataire: Fantin, Laurent

(56) Documents cités:
- EP-A1- 1 442 833
- EP-B1- 1 442 833
- CN-B- 103 480 861
- US-A1- 2014 363 252

## Description

La présente demande se rapporte à une bride de maintien d'un bloc de matière sur une table d'usinage, à un dispositif de bridage comprenant ladite bride ainsi qu'à un procédé de bridage d'un bloc de matière sur une table d'usinage.

Selon un mode de fabrication, une pièce est réalisée en usinant un bloc de matière 10, par exemple en alliage d'aluminium, fixé sur une table d'usinage 12. Selon une configuration, le bloc de matière 10 présente une surface d'appui 10.1, plaquée contre une surface de pose 12.1 de la table d'usinage 12, et au moins une surface latérale 10.2 approximativement perpendiculaire à la surface de pose 12.1 de la table d'usinage 12.

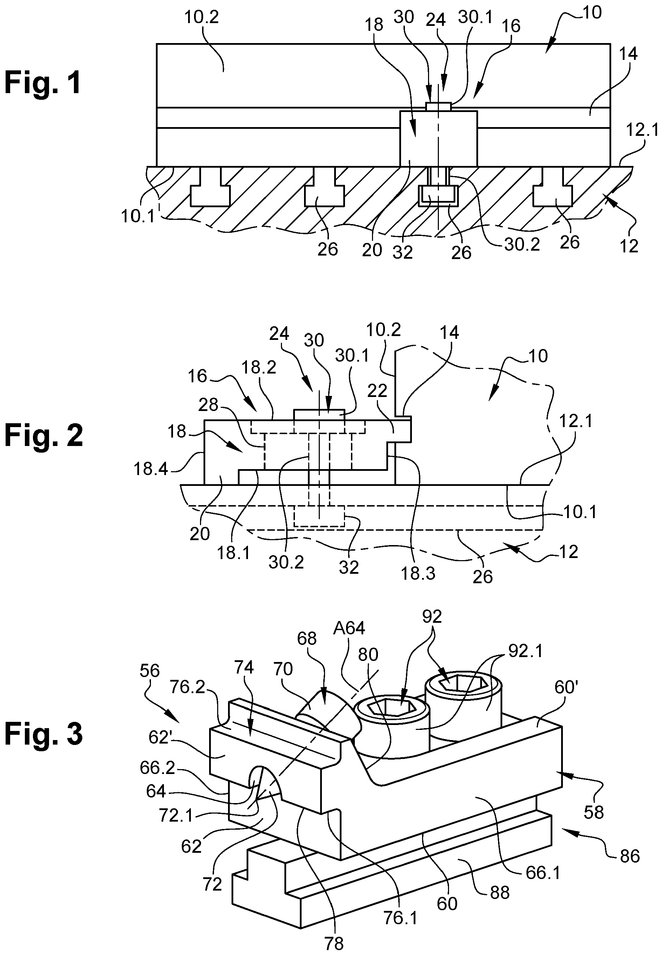

Un dispositif de bridage est utilisé pour maintenir le bloc de matière 10 immobile sur la table d'usinage 12. Selon un mode de réalisation visible sur les figures 1 et 2, le dispositif de bridage comprend au moins une rainure 14 prévue sur la surface latérale 10.2 du bloc de matière 10 ainsi qu'au moins une bride 16 solidarisée de manière démontable à la table d'usinage 12 et configurée pour coopérer avec la rainure 14 du bloc de matière 10.

Chaque bride 16 comprend un corps 18 approximativement parallélépipédique qui présente une première face 18.1 orientée vers la table d'usinage 12, une deuxième face 18.2 opposée à la première face 18.1, une troisième face dite frontale 18.3 orientée vers le bloc de matière 10 en fonctionnement ainsi qu'une quatrième face 18.4 opposée à la face frontale 18.3. La bride 16 comprend un talon 20 en saillie par rapport à la première face 18.1, positionné dans le prolongement de la quatrième face 18.4 et configuré pour être en contact contre la surface de pose 12.1 de la table d'usinage 12 en fonctionnement, ainsi qu'un nez 22 en saillie par rapport à la face frontale 18.3, positionné dans le prolongement de la deuxième face 18.2 et dimensionné pour se loger dans la rainure 14 du bloc de matière 10 en fonctionnement.

Chaque bride 16 comprend également un système de liaison 24 permettant de la relier, de manière démontable, à la table d'usinage 12. A cet effet, cette dernière comprend plusieurs rainures en T 26 débouchant au niveau de la surface de pose 12.1. Selon un mode de réalisation, un système de liaison 24 comprend un trou oblong 28 traversant le corps 18 de la bride 16 et débouchant au niveau des première et deuxième faces 18.1, 18.2, une vis 30 présentant une tête 30.1 en appui contre le corps 18 de la bride 16 et une tige filetée 30.2 logée dans le trou oblong 28, ainsi qu'un lardon 32 configuré pour se loger dans l'une des rainures en T 26 de la table d'usinage 12 et dans lequel se visse la tige filetée 30.2 de la vis 30 en fonctionnement.

Pour le maintenir immobile sur la table d'usinage 12, le bloc de matière 10 est positionné sur cette dernière et les brides 16 sont positionnées de sorte que, pour chacune d'elles, le nez 22 soit logé dans l'une des rainures 14 du bloc de matière 10. En suivant, la vis 30 est vissée de sorte que le nez 22 de chaque bride 16 exerce un effort de plaquage sur le bloc de matière 10 en direction de la table d'usinage 12.

Ce type de bride permet de parfaitement immobiliser le bloc de matière 10 sur la table d'usinage 12 quelle que soit l'orientation de cette dernière verticale ou horizontale. Toutefois, elle requiert la présence d'au moins deux rainures 14 sur le bloc de matière, ce qui surenchérit son prix.

Le document US2014/0363252 décrit des brides permettant de maintenir un bloc de matière sur une table d'usinage. Cette bride est sensiblement parallélépipédique et comprend un trou taraudé traversant, approximativement horizontal, configuré pour loger une vis pointeau. Ce mode de réalisation ne permet pas d'assurer un maintien efficace du bloc de matière sur la table d'usinage.

La présente invention vise à remédier à tout ou partie des inconvénients de l'art antérieur. A cet effet, l'invention a pour objet une bride pour maintenir un bloc de matière sur une table d'usinage, la bride comprenant un corps qui présente une première face et au moins une première face frontale, orientées respectivement vers la table d'usinage et le bloc de matière en fonctionnement, ainsi qu'un système de liaison pour relier la bride, de manière démontable, à la table d'usinage.

Selon l'invention, le corps de la bride comprend un nez, en saillie par rapport à la première face frontale, présentant une deuxième face frontale parallèle à la première face frontale ainsi que des premier et deuxième chants reliant les première et deuxième faces frontales, ledit nez étant dimensionné pour se loger dans une rainure d'un bloc de matière en fonctionnement; en ce que le corps comprend au moins un trou taraudé débouchant au moins partiellement au niveau de la deuxième face frontale et présentant un axe formant un angle non nul avec la première face et la deuxième face frontale et en ce que la bride comprend au moins une vis pointeau, se vissant dans le trou taraudé, présentant une extrémité libre pointue configurée pour pénétrer dans le bloc de matière en fonctionnement lors d'un vissage de la vis pointeau.

Ainsi, il est possible, grâce à cette bride, de maintenir sur la table d'usinage un bloc de matière dépourvu de rainures sur ses surfaces latérales.

Selon une autre caractéristique, l'axe du trou taraudé forme avec la deuxième face frontale un angle compris entre 30 et 60°.

Selon une autre caractéristique, le corps comprend au moins un insert présentant le trou taraudé.

Selon une autre caractéristique, le système de liaison comprend un lardon configuré pour être inséré dans une rainure en T de la table d'usinage en fonctionnement, au moins un trou de passage prévu au niveau du corps de la bride ainsi qu'au moins une vis, une pour chaque trou de passage, présentant une tige filetée configurée pour se loger dans le trou de passage et se visser dans le lardon, chaque trou de passage ayant un diamètre légèrement supérieur à celui de la tige filetée de la vis.

Selon une autre caractéristique, le trou taraudé débouche au niveau de la deuxième face frontale et du premier chant le plus proche de la première face.

Selon une autre caractéristique, l'axe du trou taraudé est sécant avec une arête reliant la deuxième face frontale et le premier chant.

Selon une autre caractéristique, la bride comprend une cale reliée de manière démontable au corps, positionnée sur la première face et en saillie par rapport à ladite première face. L'invention a également pour objet un dispositif de bridage comprenant au moins une bride selon l'une des caractéristiques précédentes.

L'invention a également pour objet un procédé de bridage d'un bloc de matière sur une table d'usinage, caractérisé en ce que le procédé de bridage comprend une étape de déplacement de brides selon l'une des caractéristiques précédentes sur la table d'usinage jusqu'à ce que le nez de chaque bride soit en contact avec le bloc de matière, la vis pointeau de chaque bride n'étant pas en saillie par rapport à la deuxième face frontale, une étape de serrage d'au moins une vis du système de liaison de chaque bride à un premier couple de serrage pour immobiliser chaque bride par rapport à la table d'usinage, puis une étape de vissage de la vis pointeau de chaque bride à un deuxième couple de serrage afin que l'extrémité libre pointue de la vis pointeau pénètre dans la matière du bloc de matière. Selon une autre caractéristique, le deuxième couple de serrage est inférieur au premier couple de serrage.

L'invention a également pour objet un procédé d'usinage d'un bloc de matière comprenant deux surfaces d'appui et au moins une surface latérale, caractérisé en ce que le procédé d'usinage comprend une première phase d'usinage lors de laquelle la première surface d'appui du bloc de matière est maintenue plaquée contre la table d'usinage grâce à des brides (selon l'invention) en utilisant le procédé de bridage (selon l'une des caractéristiques précédentes) puis une rainure est réalisée sur l'une des surfaces latérales du bloc de matière, ainsi qu'une deuxième phase d'usinage lors de laquelle la deuxième surface d'appui du bloc de matière est maintenue plaquée contre la table d'usinage grâce aux brides, la vis pointeau de chaque bride n'étant pas en saillie par rapport à la deuxième surface frontale, le nez de chaque bride étant logé dans la rainure.

D'autres caractéristiques et avantages ressortiront de la description de l'invention qui va suivre, description donnée à titre d'exemple uniquement, en regard des dessins annexés parmi lesquels :
- La figure 1 est une vue de face d'un dispositif de bridage illustrant un mode de réalisation de l'art antérieur,
- La figure 2 est une vue latérale d'un dispositif de bridage illustrant un mode de réalisation de l'art antérieur,
- La figure 3 est une vue en perspective d'une bride illustrant un mode de réalisation de l'invention,
- La figure 4 est une vue en perspective en éclaté de la bride visible sur la figure 3,
- La figure 5 est une coupe longitudinale d'un corps de bride qui illustre un mode de réalisation de l'invention,
- La figure 6 est une coupe longitudinale d'un corps de bride qui illustre un autre mode de réalisation,
- La figure 7 est une vue latérale d'un dispositif de bridage qui illustre un mode de réalisation de l'invention selon une configuration horizontale,
- La figure 8 est une vue latérale d'une partie du dispositif de bridage visible sur la figure 7 lors d'une première phase d'usinage,
- La figure 9 est une vue latérale d'une partie du dispositif de bridage visible sur la figure 7 lors d'une deuxième phase d'usinage,
- La figure 10 est une vue latérale d'un dispositif de bridage qui illustre un mode de réalisation de l'invention selon une configuration verticale,
- La figure 11 est une vue en perspective d'une bride illustrant un autre mode de réalisation de l'invention, et
- La figure 12 est une vue latérale de la bride visible sur la figure 11.

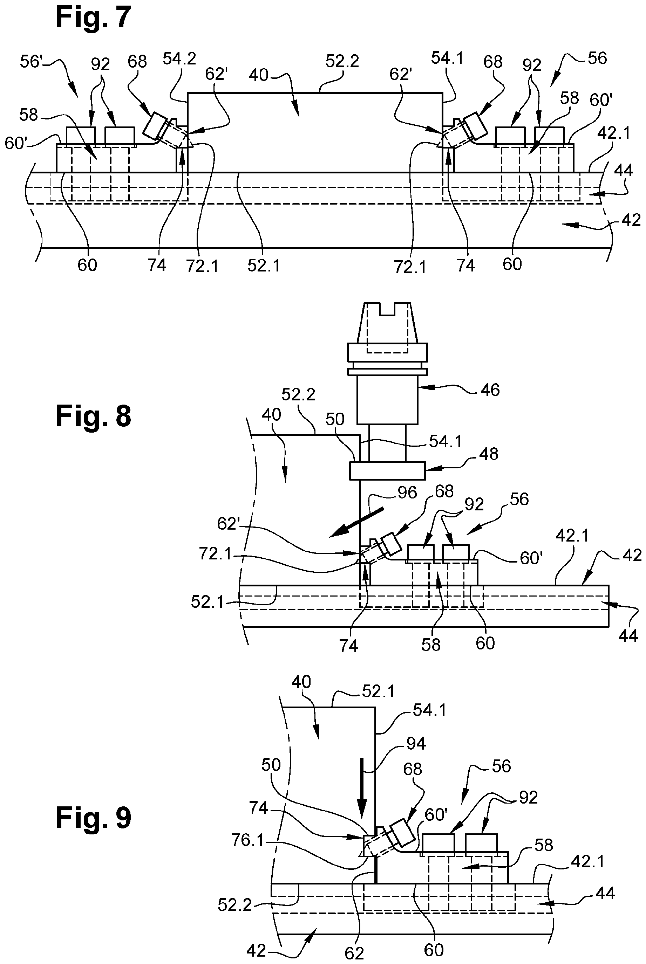

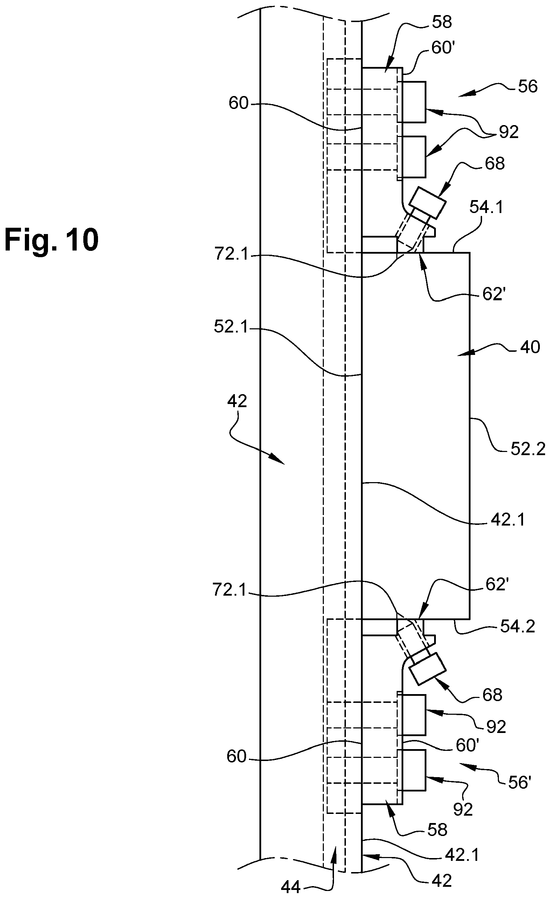

Sur les figures 7 et 10, on a représenté un dispositif de bridage permettant de maintenir immobile un bloc de matière 40 sur une table d'usinage 42.

Selon une configuration, la table d'usinage 42 présente une surface de pose 42.1 plane, destinée à recevoir le bloc de matière 40, et plusieurs rainures en T 44 débouchant au niveau de la surface de pose 42.1. La table d'usinage 42 peut être orientée horizontalement, comme illustré sur la figure 7, ou verticalement, comme illustré sur la figure 10.

Selon une application, la table d'usinage 42 est intégrée à une machine d'usinage, comme par exemple un centre d'usinage, qui comprend, en plus de la table d'usinage, au moins une tête d'usinage 46 (visible sur la figure 8) équipée d'un outil 48, comme par exemple une fraise, configuré pour réaliser une rainure 50 dans le bloc de matière 40.

La table d'usinage 42 n'est pas plus décrite car elle est connue de l'homme du métier. De plus, elle n'est pas limitée aux modes de réalisation visibles sur les figures 7 à 10.

Selon un mode de réalisation, le bloc de matière 40 est métallique, par exemple en alliage d'aluminium, et a une forme approximativement parallélépipédique. Il présente une première surface d'appui 52.1, destinée à être en appui contre la surface de pose 42.1 de la table d'usinage 42 lors d'une première phase d'usinage, comme illustré sur les figures 7 et 8 ; une deuxième surface d'appui 52.2, approximativement parallèle à la première surface d'appui 52.1, destinée à être en appui contre la surface de pose 42.1 de la table d'usinage 42 lors d'une deuxième phase d'usinage, comme illustré sur la figure 9 ; ainsi que des première et deuxième surfaces latérales 54.1, 54.2, parallèles entre elles, approximativement perpendiculaires à la surface de pose 42.1 en fonctionnement. Selon une particularité de l'invention, les première et deuxième surfaces latérales 54.1, 54.2 peuvent être dépourvues de rainures.

Bien entendu, l'invention n'est pas limitée à ce mode de réalisation pour le bloc de matière 40. A minima, ce dernier comprend au moins une surface d'appui 52.1 et au moins une surface latérale 54.1.

Le dispositif de bridage comprend au moins une bride 56 solidarisée de manière démontable à la table d'usinage 42 et configurée pour coopérer avec le bloc de matière 40 en fonctionnement de manière à le maintenir immobile contre la surface de pose 42.1 de la table d'usinage 42.

Le dispositif de bridage comprend généralement plusieurs brides 56 réparties le long des première et deuxième surfaces latérales 54.1, 54.2. Selon une configuration, le dispositif de bridage comprend au moins une première bride 56 coopérant en fonctionnement avec la première surface latérale 54.1 du bloc de matière 40 et au moins une deuxième bride 56' coopérant en fonctionnement avec la deuxième surface latérale 54.2.

Selon un mode de réalisation, la bride 56 comprend un corps 58 qui présente une première face 60 orientée vers la table d'usinage 42 en fonctionnement, au moins une face frontale 62, 62' orientée vers le bloc de matière 40 en fonctionnement ainsi qu'au moins un trou taraudé 64 débouchant au moins partiellement au niveau de la face frontale 62, 62'. La première face 60 et la face frontale 62, 62' sont sensiblement planes. La première face 60 et la face frontale 62, 62' forment entre elles un angle complémentaire à l'angle formé par la première surface d'appui 52.1 et l'une des première et deuxième surfaces latérales 54.1, 54.2 du bloc de matière 40. Lorsque les surfaces latérales 54.1, 54.2 du bloc de matière 40 sont perpendiculaires à la première surface d'appui 52.1, alors la première face 60 et la face frontale 62, 62' sont perpendiculaires.

La première face 60 et la face frontale 62, 62' s'étendent entre des première et deuxième faces latérales 66.1, 66.2 approximativement parallèles entre elles et approximativement perpendiculaires à la première face 60 et à la face frontale 62, 62'.

Pour la suite de la description, une direction longitudinale est perpendiculaire à la face frontale 62, 62'. Un plan longitudinal est un plan perpendiculaire à la première face 60 et la face frontale 62, 62'. Un plan longitudinal médian est équidistant des première et deuxième faces latérales 66.1, 66.2.

En fonctionnement, la première face 60 et la face frontale 62, 62' peuvent être plaquées respectivement contre la surface de pose 42.1 de la table d'usinage 42 et l'une des surfaces latérales 54.1, 54.2 du bloc de matière 40.

Selon une configuration, chaque trou taraudé 64 présente un axe A64, positionné dans un plan longitudinal médian, formant un angle non nul avec la première face 60 et la face frontale 62, 62'. L'axe A64 forme avec la face frontale 62, 62' un angle compris entre 30 et 60°.

La bride 56 comprend, en plus du corps 58, au moins une vis pointeau 68 se vissant dans le trou taraudé 64 en fonctionnement. Chaque vis pointeau 68 présente une tête 70 pour la visser et la dévisser ainsi qu'une tige filetée 72 configurée pour se visser dans le trou taraudé 64, comportant une extrémité libre pointue 72.1 configurée pour pénétrer dans le bloc de matière 40 en fonctionnement lors d'un vissage de la vis pointeau 68.

La vis pointeau 68 est réalisée en un matériau plus dur que le bloc de matière 40 pour permettre à son extrémité libre pointue 72.1 de pénétrer dans le bloc de matière 40. En fonctionnement, la vis pointeau 68 est configurée pour occuper une position en retrait dans laquelle elle n'est pas en saillie par rapport à la face frontale 62, 62' et une position sortie dans laquelle l'extrémité libre pointue 72.1 de la vis pointeau 68 est en saillie par rapport à la face frontale 62, 62'.

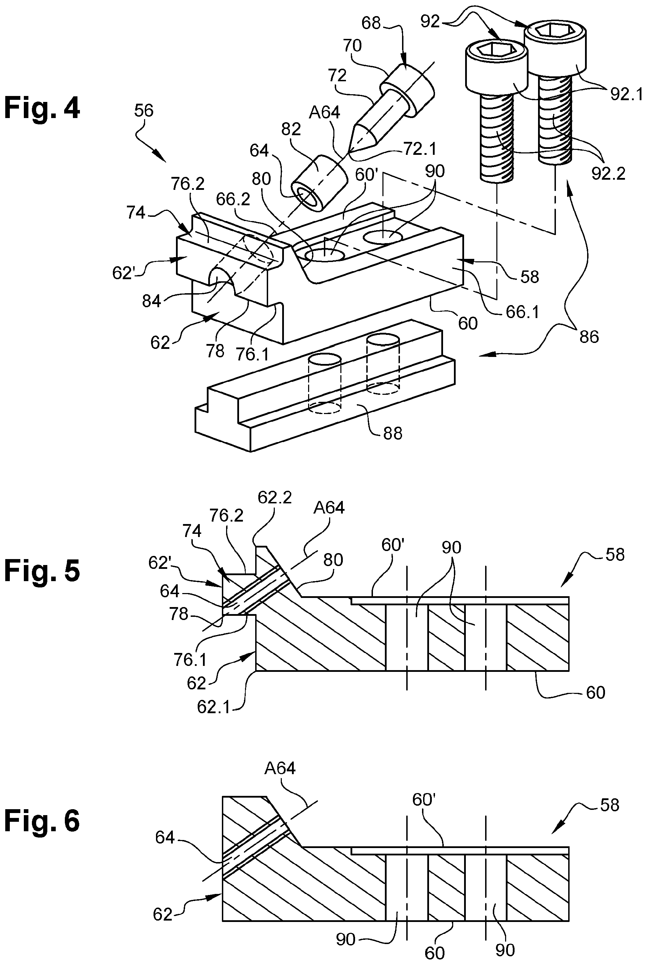

Selon un mode de réalisation visible sur la figure 6, la face frontale 62 est plane et le corps 58 de la bride ne comprend pas de nez.

Selon un mode de réalisation de l'invention visible sur les figures 3 à 5 et 7 à 10, le corps 58 comprend un nez 74. Selon ce mode de réalisation, le corps 58 comprend une première face frontale 62 ainsi qu'une nervure, en saillie par rapport à la première face frontale 62 et formant le nez 74, présentant une deuxième face frontale 62' parallèle à la première face frontale 62 ainsi que des premier et deuxième chants 76.1, 76.2 reliant les première et deuxième faces frontales 62, 62', approximativement parallèles à la première face 60 du corps 58 de la bride 56.

Le nez 74, notamment sa deuxième face frontale 62' ainsi que ses premier et deuxième chants 76.1, 76.2, est dimensionné pour se loger dans la rainure 50 du bloc de matière 40 lors d'une deuxième phase d'usinage et permettre un plaquage efficace du bloc de matière 40 contre la table d'usinage 42 lorsque le premier chant 76.1 du nez 74, le plus proche de la première face 60, est en contact avec le bloc de matière 40.

Selon un mode de réalisation, le nez 74 s'étend de la première face latérale 66.1 jusqu'à la deuxième face latérale 66.2.

Selon une configuration, le trou taraudé 64 débouche au niveau de la deuxième face frontale 62' et du premier chant 76.1. L'axe A64 du trou taraudé 64 est sécant avec une arête 78 reliant la deuxième face frontale 62' et le premier chant 76.1.

Selon un mode de réalisation visible sur la figure 5, le corps 58 de la bride 56 comprend une deuxième face 60' parallèle à la première face 60. La première face frontale 62 s'étend d'un premier bord 62.1 dans le prolongement de la première face 60 jusqu'à un second bord 62.2, décalé par rapport à la deuxième face 60', relié à cette dernière par une surface qui présente un pan incliné 80 approximativement perpendiculaire à l'axe A64 du trou taraudé 64. Le nez 74 est distant des premier et second bords 62.1, 62.2.

Selon un mode de réalisation visible sur la figure 4, le corps 58 comprend au moins un insert 82 comportant le trou taraudé 64 et inséré dans un trou lisse 84 du corps 58. Ainsi, si les filets du trou taraudé 64 sont usés seul l'insert 82 est remplacé et non tout le corps 58. Chaque bride 56 comprend également un système de liaison 86 pour la relier de manière démontable à la table d'usinage 42.

Selon un mode de réalisation, le système de liaison 86 comprend un lardon 88 configuré pour être inséré dans une rainure en T 44 de la table d'usinage 42, au moins un trou de passage 90, prévu au niveau du corps 58 de la bride 56, débouchant au niveau des première et deuxième faces 60, 60' du corps 58, ainsi qu'au moins une vis 92, une pour chaque trou de passage 90, qui présente une tête 92.1, configurée pour prendre appui contre la deuxième face 60' du corps 58, et une tige filetée 92.2 configurée pour se loger dans le trou de passage 90 et se visser dans le lardon 88. Selon une configuration, le système de liaison 86 comprend deux trous de passage 90 positionnés dans le plan longitudinal médian.

Selon un mode de réalisation, chaque trou de passage 90 a un diamètre légèrement supérieur à celui de la tige filetée 92.2 de la vis 92 pour permettre une légère inclinaison du corps 58 de la bride 56 lorsque le nez 74 est utilisé pour maintenir le bloc de matière 40. Selon un mode de réalisation, le corps 58 et le lardon 88 de la bride 56 sont en acier traité. A titre d'exemple, les vis 92 sont des vis M12 et la vis pointeau 68 une vis M10.

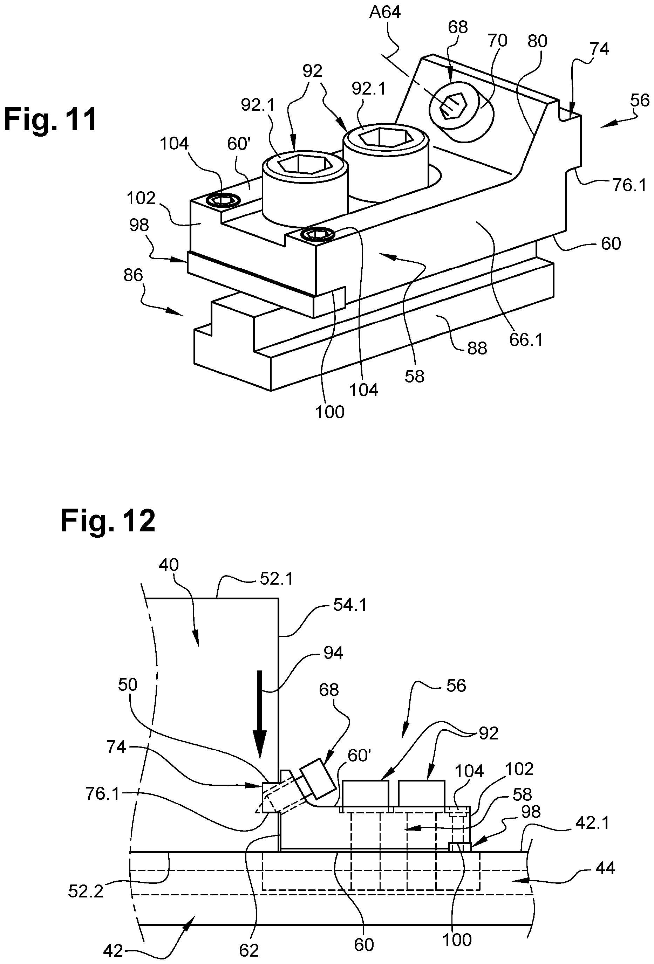

Selon un mode de réalisation visible sur les figures 11 et 12, la bride 56 comprend une cale 98 reliée de manière démontable au corps 58, positionnée sur la première face 60, en saillie par rapport à ladite première face 60 de sorte que cette première face 60 soit légèrement espacée de la surface de pose 42.1 de la table d'usinage 42 en fonctionnement.

Selon une configuration, le corps 58 comprend un logement 100, configuré pour loger la cale 98, positionné à l'intersection de la première face 60 et de la face arrière 102 du corps 58. Ce logement 100 s'étend sur toute la largeur du corps 58. En complément, la cale 98 a une section rectangulaire et s'étend sur toute la largeur du corps 58. La cale 98 et le logement 100 sont dimensionnés de sorte que la cale 98 soit légèrement en saillie, de l'ordre du millimètre, par rapport à la première face 60 du corps.

La cale 98 est reliée au corps 58 par des éléments de liaison 104 démontables, comme des vis par exemple.

La cale 98 est réalisée en un matériau moins dur que la table d'usinage 42 pour limiter les risques d'endommagement de cette table d'usinage 42. La cale 98 est démontable pour pouvoir la changer, sans changer toute la bride 56 lorsqu'elle est usée.

L'utilisation de la bride 56 est décrite au regard des figures 7 à 9.

Initialement, le bloc de matière 40, dépourvu de rainure, est posé sur la table d'usinage 42. Les brides 56 sont réparties de part et d'autre du bloc de matière 40, le lardon 88 de chacune d'elles étant introduit dans la rainure en T 44 de la table d'usinage 42.

Le procédé de bridage comprend une étape de déplacement des brides 56 sur la table d'usinage 42 jusqu'à ce que la deuxième face frontale 62' de chaque bride 56 soit en contact avec le bloc de matière 40, les vis pointeaux 68 étant en position en retrait ; une étape de serrage d'au moins une vis 92 du système de liaison 86 de chaque bride 56 à un premier couple de serrage, par exemple de l'ordre de 80N.m, pour immobiliser chaque bride 56 par rapport à la table d'usinage 42 ; puis une étape de vissage des vis pointeaux 68 à un deuxième couple de serrage, inférieur au premier couple de serrage, de l'ordre de 30 N.m afin que l'extrémité libre pointue 72.1 de chaque vis pointeau 68 pénètre dans la matière du bloc de matière 40.

Ainsi, comme illustré sur la figure 7, le bloc de matière 40 est maintenu immobile par les différentes brides 56. Le dispositif de bridage de l'invention peut aussi bien maintenir immobile un bloc de matière 40 sur une table d'usinage horizontale, comme illustré sur la figure 7, que sur une table d'usinage 42 verticale, comme illustré sur la figure 10.

Selon un mode de réalisation, le procédé d'usinage du bloc de matière 40 comprend une première phase d'usinage lors de laquelle la première surface d'appui 52.1 du bloc de matière 40 est maintenue plaquée contre la table d'usinage 42 grâce aux brides 56, comme précédemment décrit, et une rainure 50 réalisée sur l'une des surfaces latérales 54.1, 54.2 du bloc de matière 40, en utilisant un outil standard, comme illustré sur la figure 8. Selon un mode opératoire, une rainure 50 est réalisée sur chacune des surfaces latérales 54.1 et 54.2 du bloc de matière. D'autres opérations d'usinage peuvent être réalisées sur la deuxième surface d'appui 52.2

A l'issue de la première phase d'usinage, les vis pointeaux 68 et les vis 92 des brides 56 sont dévissées. Le bloc de matière 40 peut alors être retourné, de manière à plaquer sa deuxième surface d'appui 52.2 contre la table d'usinage 42. La vis pointeau 68 de chaque bride 56 étant en position de retrait, les brides 56 sont déplacées jusqu'à ce que le nez 74 de chacune d'elles soit introduit dans l'une des rainures 50 du bloc de matière 40. Il suffit alors de visser les vis 92 de chaque bride 56 pour maintenir immobilisé le bloc de matière 40 sur la table d'usinage 42 et débuter une deuxième phase d'usinage. Pour obtenir un effort de plaquage, la distance entre la rainure 50 et la deuxième surface d'appui 52.2 doit être supérieure à la distance séparant le nez 74 et la première face 60 du corps 58 de la bride 56.

Ainsi, la même bride 56 visible sur les figures 3 à 5 et 7 à 10 permet de pouvoir brider le bloc de matière 40 en utilisant soit la vis pointeau 68 soit le nez 74. Le bridage du bloc de matière 40 en utilisant le nez 74 permet de limiter les risques de déformation du bloc de matière 40, l'effort de plaquage 94 exercé par la bride 56 sur le bloc de matière 40 étant orienté uniquement selon une direction perpendiculaire à la surface de pose 42.1 de la table d'usinage 42 alors que le bridage du bloc de matière 40 en utilisant la vis pointeau 68 génère un effort de plaquage 96 avec une composante perpendiculaire à la surface de pose 42.1 de la table d'usinage 42 et une composante parallèle à la surface de pose 42.1 de la table d'usinage 42 qui peut tendre à déformer le bloc de matière 40 en fonction de sa géométrie.

## Revendications

1. Bride pour maintenir un bloc de matière (40) sur une table d'usinage (42), la bride comprenant un corps (58) présentant une première face (60) et au moins une première face frontale (62) orientées respectivement vers la table d'usinage (42) et le bloc de matière (40) en fonctionnement, ainsi qu'un système de liaison (86) pour relier la bride de manière démontable à la table d'usinage (42), **caractérisée en ce que** le corps (58) de la bride (56) comprend un nez (74), en saillie par rapport à la première face frontale (62), présentant une deuxième face frontale (62') parallèle à la première face frontale (62) ainsi que des premier et deuxième chants (76.1, 76.2) reliant les première et deuxième faces frontales (62, 62'), ledit nez (74) étant dimensionné pour se loger dans une rainure d'un bloc de matière (40) en fonctionnement; **en ce que** le corps (58) comprend au moins un trou taraudé (64) débouchant au moins partiellement au niveau de la deuxième face frontale (62') et présentant un axe (A64) formant un angle non nul avec la première face (60) et la deuxième face frontale (62') et **en ce que** la bride (56) comprend au moins une vis pointeau (68), se vissant dans le trou taraudé (64), présentant une extrémité libre pointue (72.1) configurée pour pénétrer dans le bloc de matière (40) en fonctionnement lors d'un vissage de la vis pointeau (68).

2. Bride selon la revendication 1, **caractérisée en ce que** l'axe (A64) du trou taraudé (64) forme avec la deuxième face frontale (62') un angle compris entre 30 et 60°.

3. Bride selon l'une des revendications précédentes, **caractérisée en ce que** le corps (58) comprend au moins un insert (82) présentant le trou taraudé (64).

4. Bride selon l'une des revendications précédentes, **caractérisée en ce que** le système de liaison (86) comprend un lardon (88) configuré pour être inséré dans une rainure en T (44) de la table d'usinage (42) en fonctionnement, au moins un trou de passage (90) prévu au niveau du corps (58) de la bride (56) ainsi qu'au moins une vis (92), une pour chaque trou de passage (90), présentant une tige filetée (92.2) configurée pour se loger dans le trou de passage (90) et se visser dans le lardon (88), chaque trou de passage (90) ayant un diamètre légèrement supérieur à celui de la tige filetée (92.2) de la vis (92).

5. Bride selon l'une des revendications précédentes, **caractérisée en ce que** le trou taraudé (64) débouche au niveau de la deuxième face frontale (62') et du premier chant (76.1) le plus proche de la première face (60).

6. Bride selon la revendication précédente, **caractérisée en ce que** l'axe (A64) du trou taraudé (64) est sécant avec une arête (78) reliant la deuxième face frontale (62') et le premier chant (76.1).

7. Bride selon l'une des revendications précédentes, **caractérisée en ce que** la bride (56) comprend une cale (98) reliée de manière démontable au corps (58), positionnée sur la première face (60) et en saillie par rapport à ladite première face (60).

8. Dispositif de bridage comprenant au moins une bride selon l'une des revendications précédentes.

9. Procédé de bridage d'un bloc de matière (40) sur une table d'usinage (42), **caractérisé en ce que** le procédé de bridage comprend une étape de déplacement de brides (56) selon l'une des revendications 1 à 7 sur la table d'usinage (42) jusqu'à ce que le nez (74) de chaque bride (56) soit en contact avec le bloc de matière (40), la vis pointeau (68) de chaque bride (56) n'étant pas en saillie par rapport à la deuxième face frontale (62') ; une étape de serrage d'au moins une vis (92) du système de liaison (86) de chaque bride (56) à un premier couple de serrage pour immobiliser chaque bride (56) par rapport à la table d'usinage (42) ; puis une étape de vissage de la vis pointeau (68) de chaque bride (56) à un deuxième couple de serrage afin que l'extrémité libre pointue (72.1) de la vis pointeau (68) pénètre dans la matière du bloc de matière (40).

10. Procédé de bridage selon la revendication précédente, **caractérisé en ce que** le deuxième couple de serrage est inférieur au premier couple de serrage.

11. Procédé d'usinage d'un bloc de matière (40) comprenant deux surfaces d'appui (52.1, 52.2) et au moins une surface latérale (54.1, 54.2), **caractérisé en ce que** le procédé d'usinage comprend une première phase d'usinage lors de laquelle la première surface d'appui (52.1) du bloc de matière (40) est maintenue plaquée contre la table d'usinage (42) grâce à des brides (56) selon l'une des revendications 5 à 7, en utilisant le procédé de bridage selon l'une des revendications 9 à 10, et une rainure (50) est réalisée sur l'une des surfaces latérales (54.1, 54.2) du bloc de matière (40) ; ainsi qu'une deuxième phase d'usinage lors de laquelle la deuxième surface d'appui (52.2) du bloc de matière (40) est maintenue plaquée contre la table d'usinage (42) grâce aux brides (56), la vis pointeau de chaque bride (56) n'étant pas en saillie par rapport à la deuxième surface frontale (62'), le nez de chaque bride (56) étant logé dans la rainure (50).

## Patentansprüche

1. Flansch zum Halten eines Materialblocks (40) auf einem Bearbeitungstisch (42), wobei der Flansch einen Körper (58) mit einer ersten Fläche (60) und mit wenigstens einer ersten Stirnfläche (62) umfasst, die bei Verwendung jeweils dem Bearbeitungstisch (42) und dem Materialblock (40) zugewandt sind, sowie ein Verbindungssystem (86) zum lösbaren Verbinden des Flansches mit dem Bearbeitungstisch (42), **dadurch gekennzeichnet, dass** der Körper (58) des Flansches (56) eine Nase (74) umfasst, die von der ersten Stirnfläche (62) vorsteht und eine zweite Stirnfläche (62') parallel zur ersten Stirnfläche (62) sowie eine erste und eine zweite Schmalseite (76.1, 76.2) aufweist, die die erste und zweite Stirnfläche (62, 62') verbinden, wobei die Nase (74) so bemessen ist, dass sie bei Verwendung in eine Nut eines Materialblocks (40) passt, und dass der Körper (58) wenigstens ein Gewindeloch (64) umfasst, das zumindest teilweise an der zweiten Stirnfläche (62') mündet und eine Achse (A64) aufweist, die mit der ersten Stirnfläche (60) und der zweiten Stirnfläche (62') einen Winkel ungleich Null bildet, und dass der Flansch (56) wenigstens eine Nadelschraube (68) umfasst, die in das Gewindeloch (64) einschraubbar ist und ein spitzes freies Ende (72.1) aufweist, das so eingerichtet ist, dass es bei Verwendung beim Einschrauben der Nadelschraube (68) in den Materialblock (40) eindringt.

2. Flansch nach Anspruch 1, **dadurch gekennzeichnet, dass** die Achse (A64) des Gewindelochs (64) mit der zweiten Stirnfläche (62') einen Winkel zwischen 30 und 60° bildet.

3. Flansch nach einem der vorhergehenden Ansprüche, **dadurch gekennzeichnet, dass** der Körper (58) wenigstens einen Einsatz (82) umfasst, der das Gewindeloch (64) aufweist.

4. Flansch nach einem der vorhergehenden Ansprüche, **dadurch gekennzeichnet, dass** das Verbindungssystem (86) eine Leiste (88) umfasst, die so eingerichtet ist, dass sie bei Verwendung in eine T-Nut (44) des Bearbeitungstisches (42) einsetzbar ist, und wenigstens ein Durchgangsloch (90) umfasst, das am Körper (58) des Flansches (56) vorgesehen ist, sowie wenigstens eine Schraube (92) umfasst, eine für jedes Durchgangsloch (90), mit einem Gewindeschaft (92.2), der so eingerichtet ist, dass er in das Durchgangsloch (90) passt und in die Leiste (88) einschraubbar ist, wobei jedes Durchgangsloch (90) einen Durchmesser aufweist, der etwas größer ist als der Durchmesser des Gewindeschafts (92.2) der Schraube (92).

5. Flansch nach einem der vorhergehenden Ansprüche, **dadurch gekennzeichnet, dass** das Gewindeloch (64) im Bereich der zweiten Stirnfläche (62') und der ersten Schmalseite (76.1), die der ersten Fläche (60) am nächsten liegt, mündet.

6. Flansch nach dem vorhergehenden Anspruch, **dadurch gekennzeichnet, dass** die Achse (A64) des Gewindelochs (64) eine Kante (78) schneidet, die die zweite Stirnfläche (62') und die erste Schmalseite (76.1) verbindet.

7. Flansch nach einem der vorhergehenden Ansprüche, **dadurch gekennzeichnet, dass** der Flansch (56) eine Unterlage (98) umfasst, die abnehmbar mit dem Körper (58) verbunden ist, auf der ersten Seite (60) positioniert ist und von der ersten Seite (60) vorsteht.

8. Spannvorrichtung mit wenigstens einem Flansch nach einem der vorhergehenden Ansprüche.

9. Verfahren zum Spannen eines Materialblocks (40) auf einem Bearbeitungstisch (42), **dadurch gekennzeichnet, dass** das Spannverfahren einen Schritt des Bewegens von Flanschen (56) nach einem der Ansprüche 1 bis 7 auf dem Bearbeitungstisch (42) umfasst, bis die Nase (74) jedes Flansches (56) den Materialblock (40) berührt, wobei die Nadelschraube (68) jedes Flansches (56) nicht über die zweite Stirnfläche (62') hinausragt, einen Schritt des Anziehens wenigstens einer Schraube (92) des Verbindungssystems (86) jedes Flansches (56) mit einem ersten Anzugsmoment, um jeden Flansch (56) in Bezug auf den Bearbeitungstisch (42) zu fixieren; dann einen Schritt des Eindrehens der Nadelschraube (68) jedes Flansches (56) mit einem zweiten Anzugsmoment, damit das spitze freie Ende (72. 1) der Nadelschraube (68) in das Material des Materialblocks (40) eindringt.

10. Verfahren zum Spannen nach dem vorhergehenden Anspruch, **dadurch gekennzeichnet, dass** das zweite Anzugsmoment kleiner ist als das erste Anzugsmoment.

11. Verfahren zum Bearbeiten eines Materialblocks (40), der zwei Auflageflächen (52.1, 52.2) und wenigstens eine Seitenfläche (54.1, 54.2) aufweist, **dadurch gekennzeichnet, dass** das Bearbeitungsverfahren eine erste Bearbeitungsphase umfasst, in der die erste Auflagefläche (52.1) des Materialblocks (40) durch Flansche (56) nach einem der Ansprüche 5 bis 7 unter Verwendung des Spannverfahrens nach einem der Ansprüche 9 bis 10 gegen den Bearbeitungstisch (42) gepresst gehalten wird, und in der eine Nut (50) auf einer der Seitenflächen (54.1, 54.2) des Materialblocks (40) ausgebildet wird, sowie eine zweite Bearbeitungsphase umfasst, bei der die zweite Auflagefläche (52.2) des Materialblocks (40) durch die Flansche (56) gegen den Bearbeitungstisch (42) gedrückt gehalten wird, wobei die Nadelschraube jedes Flansches (56) nicht über die zweite Stirnfläche (62') hinausragt und die Nase jedes Flansches (56) in der Nut (50) aufgenommen ist.

## Claims

1. Clamp for retaining a block (40) of material on a machining table (42), the clamp comprising a body (58) having a first face (60) and at least one first front face (62) respectively oriented toward the machining table (42) and the block (40) of material when in use, as well as a connecting system (86) for connecting the clamp in a demountable manner to the machining table (42), **characterized in that** the body (58) of the clamp (56) comprises a nose (74) projecting relative to the first front face (62) having a second front face (62') parallel to the first front face (62) as well as first and second edges (76.1, 76.2) connecting the first and second front faces (62, 62'), said nose (74) being sized to be housed in a groove in a block (40) of material when in use, **in that** the body (58) comprises at least one internally threaded hole (64) opening at least partly at the level of the second front face (62') and having an axis (A64) forming a non-zero angle with the first face (60) and the second front face (62') and **in that** the clamp (56) comprises at least one grub screw (68) that screws into the internally threaded hole (64) having a pointed free end (72.1) configured to penetrate into the block (40) of material when in use when screwing in the grub screw (68).

2. Clamp as claimed in claim 1, **characterized in that** the axis (A64) of the internally threaded hole (64) forms with the second front face (62') an angle between 30 and 60° inclusive.

3. Clamp as claimed in either one of the preceding claims, **characterized in that** the body (58) comprises at least one insert (82) including the internally threaded hole (64).

4. Clamp as claimed in any one of the preceding claims, **characterized in that** the connecting system (86) comprises a gib (88) configured to be inserted in a T-shaped groove (44) of the machining table (42) when in use, at least one through-hole (90) at the level of the body (58) of the clamp (56) as well as at least one screw (92), one for each through-hole (90), including a threaded shank (92.2) configured to be housed in the through-hole (90) and to be screwed into the gib (88), each through-hole (90) having a diameter slightly greater than that of the threaded shank (92.2) of the screw (92).

5. Clamp as claimed in any one of the preceding claims, **characterized in that** the internally threaded hole (64) opens at the level of the second front face (62') and of the first edge (76.1) closest to the first face (60).

6. Clamp as claimed in the preceding claim, **characterized in that** the axis (A64) of the internally threaded hole (64) intersects an edge (78) connecting the second front face (62') and the first edge (76.1).

7. Clamp as claimed in any one of the preceding claims, **characterized in that** the clamp (56) comprises a shim (98) connected in a removable manner to the body (58), positioned on the first face (60) and projecting relative to said first face (60) .

8. Clamping device comprising at least one clamp as claimed in any one of the preceding claims.

9. Method of clamping a block (40) of material onto a machining table (42), **characterized in that** the method of clamping comprises a step of moving clamps (56) as claimed in any one of claims 1 to 7 on the machining table (42) until the nose (74) of each clamp (56) is in contact with the block (40) of material, the grub screw (68) of each clamp (56) not projecting relative to the second front face (62'), a step of tightening at least one screw (92) of the connecting system (86) of each clamp (56) to a first clamping torque to immobilize each clamp (56) relative to the machining table (42), followed by a step of screwing the grub screw (68) of each clamp (56) to a second clamping torque in order for the pointed free end (72.1) of the grub screw (68) to penetrate into the material of the block (40) of material.

10. Method of clamping as claimed in the preceding claim, **characterized in that** the second clamping torque is less than the first clamping torque.

11. Method of machining a block (40) of material comprising two bearing surfaces (52.1, 52.2) and at least one lateral surface (54.1, 54.2), **characterized in that** the machining method comprises a first machining phase during which the first bearing surface (52.1) of the block (40) of material is held pressed against the machining table (42) thanks to clamps (56) as claimed in any one of claims 5 to 7, using the clamping method as claimed in either one of claims 9 or 10, and a groove (50) is then produced on one of the lateral surfaces (54.1, 54.2) of the block (40) of material, as well as a second machining phase during which the second bearing surface (52.2) of the block (40) of material is held pressed against the machining table (42) thanks to the clamps (56), the grub screw of each clamp (56) not projecting relative to the second front surface (62') and the nose of each clamp (56) being housed in the groove (50).
